# EUROPÄISCHE PATENTSCHRIFT

(11) **EP 4 001 240 B1**
(45) Veröffentlichungstag und Bekanntmachung des Hinweises auf die Patenterteilung: **20.08.2025**
(21) Anmeldenummer: 21208020.4
(22) Anmeldetag: 12.11.2021
(51) Int. Cl.: C04B 35/486, C04B 35/626, C04B 35/632, C04B 35/634, C01G 25/02

(54) **VERFAHREN ZUR ÜBERFÜHRUNG SUSPENDIERTER KERAMISCHER NANOPARTIKEL AUS EINEM WÄSSRIGEN MEDIUM IN EIN ORGANISCHES PHOTOVERNETZBARES MEDIUM ZUM ERLANGEN EINES TRANSPARENTEN KERAMISCHEN SCHLICKERS MIT DEFINIERTER NANOPARTIKELGRÖSSE**
METHOD FOR TRANSFERRING SUSPENDED CERAMIC NANOPARTICLES FROM AN AQUEOUS MEDIUM TO AN ORGANIC PHOTOCROSSLINKABLE MEDIUM FOR OBTAINING A TRANSPARENT CERAMIC SLIP WITH A DEFINED NANOPARTICLE SIZE
PROCÉDÉ DE TRANSFERT DES NANOPARTICULES DE CÉRAMIQUE EN SUSPENSION D'UN MILIEU AQUEUX DANS UN MILIEU ORGANIQUE PHOTORÉTICULABLE PERMETTANT D'OBTENIR UNE BARBOTINE DE CÉRAMIQUE TRANSPARENTE DE TAILLE DÉFINIE DE NANOPARTICULE

(30) Priorität: 12.11.2020 DE 102020129910
(43) Veröffentlichungstag der Anmeldung: 25.05.2022
(73) Patentinhaber: Bundesrepublik Deutschland, vertreten durch den Bundesminister für Wirtschaft und Energie, 12205 Berlin (DE)
(72) Erfinder: SÄNGER, Johanna Christiane, 37308 Heilbad Heiligenstadt (DE); MEYER, Frank, 66386 St. Ingbert (DE); GÖBBERT, Christian, 63785 Obernburg am Main (DE)
(74) Vertreter: Zimmermann & Partner Patentanwälte mbB

(56) Entgegenhaltungen:
- EP-A1- 3 663 264
- DE-A1- 102017 205 432
- US-A1- 2006 147 699
- US-A1- 2018 305 262

## Beschreibung

### Technisches Gebiet

Die Erfindung liegt auf dem Gebiet der additiven Fertigung keramischer Bauteile mit Hilfe eines Keramik-Schlickers.

### Vorbekannter Stand der Technik

Für die Zwei-Photonen-Polymerisation sind transparente photovernetzbare Harze essentiell für die Strahlführung. Dies mit Keramik-Partikeln zu gewährleisten erfordert die Beschränkung einer maximalen Größe der Partikel auf ca. 150 nm. Keramische Partikel dieser Größe liegen in kommerziell verfügbaren wässrigen Nano-Suspensionen vor. Derartige Nano-Suspensionen umfassen Partikel, deren hydrodynamischer Durchmesser (bestimmt mittels dynamischer Lichtstreuung als gewichteter Wert) kleiner als 150 nm ist, die homogen im Suspensionsmittel verteilt sind und die auch nach längerer Zeit, auch über mehrere Monate hinweg, keine Agglomerate bilden.

Allerdings lassen sich im wässrigen Milieu keine hohen Partikelfrachten größer als 60 Gewichts-% erreichen. Außerdem ist die Viskosität des Schlickers zu gering, um mittels Zwei-Photonen-Polymerisation eine typischerweise angestrebte hohe räumliche Auflösung, beispielsweise im unteren Mikrometer-Maßstab, zu erzielen. Zusätzlich sind die Schlicker nicht langzeit-stabil, da sie, bedingt durch den hohen Dampfdruck des Wassers, schnell austrocknen.

Der Einfluss einer Reduktion der Partikelgröße wurde von Mühler, Thomas, et al. (2014) "Strategies for the selective volume sintering of ceramics." Journal of Materials Research 29(17): 2095-2099 zum Volumensintern bereits gezeigt aber konnte im festen Zustand nicht bis auf Partikelgrößen unter 120 nm fortgeführt werden. Organische keramischgefüllte Suspensionen, die für Verfahren gemäß EP 2 890 548 B1, EP 2 404 590 A1 und ähnlichen Verfahren mit Ein-Photonen-Lichtquellen geeignet sind, sind auf Grund der großen Partikelgrößen für eine laserinduzierte Zwei-Photonenpolymerisation ungeeignet. In DE 10 2017 205 432 A1, die sich der Zwei-Photonen-Polymerisation von Keramik-Schlickern widmet, wurde davon ausgegangen, dass der Bereich geeigneter Partikelgrößen zwischen 20 nm und 50 µm liegt, um für die Anwendung ausreichend transparente Partikelsuspensionen bereitstellen zu können. Jedoch ist dabei nicht beschrieben, wie sich eine Agglomeration von Partikeln in der verwendeten Suspension auf die Eignung der Suspensionen für die beschriebene Strukturierung mittels Zwei-Photonen-Polymerisation auswirkt. Grundsätzlich müssen Agglomerationen unbedingt vermieden werden. Keramische Partikel kleiner als 150 nm sind einzig in keramischen Suspensionen zu finden, welche durch So-Gel-Verfahren hergestellt sind, wie von Goebbert, Christian, et al. (1999) in der Publikation "Ultrafiltration conducting membranes and coatings from redispersable, nanoscaled, crystalline SnO2:Sb particles." Journal of Materials Chemistry 9(1): 253-258 beschrieben.

Sowohl klassische Stereolithographie-Schlicker wie auch fein gemahlene Pulver-Betten, eine Kavität gefüllt mit keramischen Pulver mit Partikelgrößen zwischen 0,5 und 10 Mikrometer wie von Mühler, Thomas, et al. (2014) "Strategies for the selective volume sintering of ceramics." Journal of Materials Research 29(17): 2095-2099 beschrieben, eignen sich nicht zur Herstellung transparenter keramischer Nano-Suspensionen. Die angestrebten Partikelgrößen - also Partikelgrößen, die den Ansprüchen der Zwei-Photonen-Polymerisation genügen, sind mit keiner klassischen Technologie erreichbar. Jedoch eignen sich kommerziell verfügbare wässrige keramische Nano-Suspensionen hervorragend als Partikelquelle, sind durch die wässrige Matrix allerdings nur bedingt für die Verwendung mit einer Zwei-Photonen-Polymerisation geeignet. Die Suspensionen sind niedrigviskos. Dadurch kann die bei der Strukturierung angestrebte hohe Auflösung im Mikrometerbereich auf Grund der Diffusion der photoaktiven Monomere/Polymere in der Suspension nicht gewährleistet werden. Während der Polymerisation diffundieren die Monomere/Polymere über den belichteten Bereich hinaus und erzeugt somit eine Unschärfe im gedruckten Ergebnis. Je höher die Viskosität, umso geringer ist die Diffusion der aktiv polymerisierenden Monomere/Polymere über den belichteten Bereich hinaus.

Der niedrige Keramikanteil führt zu einer großen Schrumpfung während des Sinterprozesse und dadurch zu Verzerrungen, Rissen und Inhomogenitäten. Der hohe Dampfdruck destabilisiert die Suspension durch schnelles Austrocknen. Verdunstet zu viel Wasser, so agglomerieren die Partikel und bilden einen Feststoff, der nicht mehr mittels lasergestützter Zwei-Photonenpolymerisation (2PP) strukturiert werden kann, bzw. nicht mehr schreibfähig ist.

Es ist daher Aufgabe der vorliegenden Erfindung, in wässrigem Medium suspendiert vorliegende keramische Nanopartikel in ein organisches Medium zu überführen, das einen geringeren Dampfdruck aufweist, photovernetzbar ist und eine geeignete Viskosität aufweist, um die Herstellung eines keramischen Bauteils aus einem entsprechenden Grünkörper basierend auf einem Zwei-Photonen-Prozess hinsichtlich Auflösung, Stabilität und Sintereigenschaften zu verbessern. Insbesondere ist es das Ziel, suspendierte keramische Nanopartikel aus einer wässrigen Suspension in ein organisches photoaktives Medium zu überführen, ohne die Nanopartikel während dieses Überführens zu destabilisieren und dadurch zu agglomerieren.

### Kurzdarstellung der Erfindung

Diese Aufgabe wird gelöst durch ein Verfahren nach Anspruch 1. Gemäß dem vorgeschlagenen Verfahren werden in wässriger Lösung dispergiert vorliegende Nanopartikel in ein organisches Medium überführt, das unter Normalbedingungen (Raumtemperatur und Normaldruck) nicht austrocknet, beispielsweise ein Medium wie Polyethylenglykoldiacrylat (PEG-DA), das mit < 0,01hPa einen ausgeprägt geringeren Dampfdruck als Wasser hat.

Gemäß einer Ausführungsform umfasst dieses Verfahren ein Verdünnen der zunächst vorliegenden wässrigen Suspension keramischer Nanopartikel mit iso-Propanol. Die so erhaltene erste Flüssigkeit umfasst in einem Gemisch aus Wasser und iso-Propanol dispergierte keramische Nanopartikel. Die erste Flüssigkeit wird mit einer hier als zweite Flüssigkeit bezeichneten Lösung gemischt. Die zweite Flüssigkeit umfasst eine organische Verbindung, die zumindest eine terminale, lichtinduziert zur Radikalbildung aktivierbare Doppelbindung aufweist. Mittels laserinduzierter Zwei- oder Mehrphotonenabsorption kann so ortsselektiv / d.h. nur im Fokus eines Laserstrahls / in einem Arbeitsvolumen ein Polymernetzwerk generiert werden, das im Arbeitsvolumen dispergiert vorliegende Nanopartikel fixiert und letztlich zur Ausbildung eines Grünkörpers führt. Verallgemeinernd wird diese mindestens eine, bevorzugt zwei der beschriebenen lichtinduziert polymerisierbare funktionelle Gruppen aufweisende organische Verbindung hier als Bindemittel bezeichnet. Es können gleichzeitig unterschiedliche organische Moleküle gelöst vorliegen, beispielsweise als Monomere oder Polymerketten und als Vernetzer.

Neben dem gelösten Bindemittel enthält die zweite Lösung einen Mehrphotonenpolymerisationsinitiator - alle in iso-Propanol gelöst. Die zweite Flüssigkeit umfasst also mindestens die 3 funktionalen Komponenten: organisches Bindemittel, Photopolymerisations-Initiator und i-PrOH als ein im Überschuss vorliegendes Lösungsmittel. Unter "organisch" werden in diesem Zusammenhang Verbindungen der Elemente ausgewählt unter: C, H, N, O, P und S verstanden. Das beim Mischen der beiden Flüssigkeiten erhaltene Volumen - hier als Ausgangsvolumen bezeichnet - wird nachfolgend allmählich eingeengt, beispielsweise indem die Mischung auf einer Heizplatte bis maximal 50 °C erwärmt und dabei gleichzeitig gerührt wird. Durch dieses Einengen wird ausgehend vom Ausgangsvolumen ein Endvolumen erhalten, das nunmehr als ein einsatzbereiter Schlicker zur Verfügung steht, der mittels 2PP lokal strukturiert zu einem Grünkörper verfestigt werden kann. Ein Feststoffanteil der keramischen Nanopartikel im Endvolumen des Schlickers beträgt von 50 bis 95 Gewichts-%, bevorzugt von 60 bis 90 Gewichts-%, weiter bevorzugt von 65 bis 80 Gewichts-%.

Erfindungsgemäß übernimmt das organische Bindemittel die Funktion des Dispersionsmediums der Nanopartikel aus der ersten Flüssigkeit (typischerweise Wasser) und die Funktion des Lösungsmittels (typischerweise Isopropanol) der zweiten Lösung. Zu diesem Zweck ist das organische Bindemittel hinsichtlich seines Molekulargewichts und seiner Viskosität so ausgewählt, dass es bei Raumtemperatur flüssig und niedrigviskos ist.

Da Wasser und iso-Propanol vollständig miteinander mischbar sind, wird das Wasser beim Einengen der Mischung, bzw. beim Verdunsten des iso-Propanol mitgezogen und übrig bleiben die suspendierten Nanopartikel im neuen organischen photoaktiven Medium - hier als Schlicker bezeichnet. Zu dem Zeitpunkt, wenn nur noch ein geringer Anteil Wasser und i-PrOH in der Suspension vorhanden sind, stellt - im Falle der Verwendung von PEG-DA als organischem Bindemittel - dieses volumenbezogen den überwiegenden Anteil der flüssigen Bestandteile des allmählich ausgebildeten Schlickers dar. In PEG-DA sind dann sowohl die keramischen Nano-Partikel, als auch Spuren von Wasser und i-PrOH (in welchem Verhältnis auch immer) enthalten. Der so allmählich ausgebildete Schlicker enthält maximal 5 Gewichts-% Wasser und i-PrOH, bevorzugt weniger als 1 Gewichts-%. Das dominierende Dispersionsmedium ist somit das jeweils verwendete organische Polymer, also im hier beispielhaft angeführten Fall: PEG-DA.

Gemäß einer Ausführungsform erfolgt das Verdünnen um mindestens das doppelte Gewicht, bevorzugt um das 5 bis 10-fache. Das schafft vorteilhaft einen deutlichen Überschuss an iso-Propanol bei entsprechender Verringerung des Wasseranteils. Hierdurch wird die nachfolgende Entfernung des Wassers erleichtert.

Gemäß einer Ausführungsform wird das iso-Propanol zumindest teilweise ersetzt durch ein anderes mit Wasser mischbares organisches Lösemitteln, das sowohl mit Wasser mischbar als auch im Stande ist, jeweils eingesetzte organische Monomere, Polymere, Vernetzer und Mehrphotonenpolymerisationsinitiator zu lösen. Dazu zählen beispielsweise Methanol, Ethanol, Aceton, Acetonitril, Tetrahydrofuran, Dimethylsulfoxid, 1,4-Dioxan. Dabei ist es in erster Näherung gleichgültig, ob ein zeotropes oder azeotropes Wasser/Lösemittel-Gemisch vorliegt. Das Ziel ist es, die Partikel in das organische Monomer/Polymer zu überführen und dabei das Wasser möglichst zu "verdünnen". Sobald genügend Wasser und z.B. i-PrOH verdampft sind, bildet das Monomer/Polymer den dominierenden Anteil der Matrix. Ein zeotropes Gemisch wäre in der Tat besser, da man dann davon ausgehen kann, dass Wasser und das Lösemittel im gleichen Verhältnis verdunsten. Nach bisherigen praktischen Erfahrungen kann davon ausgegangen werden, dass das zurückbleibende Wasser nur noch einen Bruchteil des Volumens im übrigen Schlicker ausmacht, in diesem in Spuren gelöst ist (PEG-DA und Wasser sind ja miteinander auch mischbar), aber keinen Einfluss mehr hat und dadurch vernachlässigt werden kann.

Gemäß einer Ausführungsform erfolgt das vorstehend erwähnte Einengen des Ausgangsvolumens, das heißt desjenigen Volumens, das sich beim Vereinen der ersten und der zweiten Flüssigkeiten ergibt, unter Verwendung einer Heizplatte unter ständigem Rühren, beispielsweise mit einem Magnetrührer mit integrierter Heizplatte, oder unter Verwendung eines Rotationsverdampfers.

Vorteilhaft wird so die Partikelfracht je Volumeneinheit besonders schonend erhöht. Alternativ kann auch mittels einer Ultrafiltration, Nanofiltration, oder einer Umkehrosmose das Volumen des Schlickers gezielt auf einen bevorzugten Wert eingestellt werden. Die genannten Techniken sind bevorzugt als Alternativen für einen großtechnischen Prozess geeignet. Vorteilhaft kann Lösungsmittel im Kreislauf geführt werden.

Nach dem Einengen des Ausgangsvolumens entsteht ein Schlicker, in dem die Nanopartikel hauptsächlich im organischen Binder (z.B. Monomer/Polymer und Vernetzer) dispergiert sind. Der Rest-Feuchtegehalt, der abhängig von den hygroskopischen Eigenschaften des Bindemittels zwischen 0 und 5 Gewichts-% betragen kann. Der Rest-Feuchtegehalt ist messbar mittels Thermogravimetrie (TGA).

Soll also beispielsweise eine wässrige Nanosuspension mit einer Ausgangs-Partikelfracht von 50 Gewichts-% in einen Schlicker mit 70 Gewichts-% überführt werden, so enthält die Ausgangssuspension 50 Gewichts-% Keramik und 50 Gewichts-% Wasser. Aus der Masse der Keramik ergibt sich die benötigte Masse an Monomer/Polymer um einen Schlicker mit
70 Gewichts-% zu bilden in dem 70 Gewichts-% Keramik und 30 Gewichts-% Monomer/Polymer enthalten sind. (Beispielsweise: 1g Keramik-Suspension enthält 0,5g Keramik und 0,5g Wasser. Dementsprechend müssen 0,21g Monomer/Polymer eingewogen werden. Der resultierende Schlicker hat eine Masse von 0,71g mit 0,5g (~70 Gewichts-%) Keramik und 0,21g (~30 Gewichts-%) Monomer/Polymer).

Gemäß einer Ausführungsform ist das in der zweiten Flüssigkeit gelöste organische Bindemittel - das den dominierenden Anteil der Matrix/des dominierenden Dispersionsmedium des Schlickers ausbilden soll - ausgewählt unter: Polymethylmethacrylat (PMMA), 1,6-Hexandioldiacrylat (HDDA, 1,6-Hexandioldimethacrylat (HDDMA), acryliertem Polyethylenglykol (PEG-DA = Polyethylenglykoldiacrylat), Polypropylenglykol dimethacrylat (PPG-DMA), acryliertem Polypropylenglycol (PPG-DA), Dipentaerythritol pentaacrylat, Trimethylolpropane triacrylat, ethoxyliertem Pentaerythritoltetraacrylat (EPTA) und 2-Hydroxyethylacrylat.

Die bezeichneten organischen Bindemittel, also Monomere und Polymere sollten niedrigviskos bis maximal 10 mPa·s (dynamische Viskosität) sein. Die Viskosität des organischen Bindemittels wird mittels Kapillar-Viskosimeter, z.B. mit einem Ubbelohde-Viskosimeter bestimmt. Hochviskose Polymere wie UDMA oder PMMA eignen sich nicht als Bindemittel (Binder), da deren Viskosität mit der eingebrachten hohen Partikelfracht die Höchstgrenze von 10000mPa·s überschreitet.

Die Viskosität des Schlickers liegt bevorzugt im Bereich von: 1-10000 mPa·s. Hierbei ist die Viskosität messbar, beispielsweise, gemäß DIN EN ISO 2884-1 (Beschichtungsstoffe - Bestimmung der Viskosität mit Rotationsviskosimetern - Teil 1: Kegel-Platte-Viskosimeter bei hohem Geschwindigkeitsgefälle (ISO 2884-1:1999); Deutsche Fassung EN ISO 2884-1:2006). Messungen können beispielsweise mit einem Rheometer MCR 502 Anton Paar GmbH vorgenommen werden. Für die dynamische Viskosität (η = eta) wird eine CP25-1 (Cone-Plate 25mm, 1° Winkel) verwendet und die Viskosität über einen Scherraten-Bereich von 0,1-200/s aufgenommen. Üblicherweise wird die Viskosität bei 100/s abgelesen und als Richtwert verwendet. Dabei liegen die Werte, je nach Partikelfracht, bevorzugt zwischen 100 und 5000 mPa·s.

Die wässrigen Suspensionen lassen sich bei gleichzeitiger Zugabe der erforderlichen organischen photoaktiven Substanzen bis maximal 60 Gewichts-% konzentrieren und können dadurch nur eingeschränkt zu akkuraten Formkörpern gesintert werden. Als organische photoaktive Substanz bzw. polymerisierbare Monomere/Polymere werden im vorliegenden Zusammenhang, d.h. in der Beschreibung und den Ansprüchen, organische Monomere und/oder Polymere mit terminalen Acrylat- oder Methyacrylat-Gruppen verstanden. In der Stereolithografie werden derartige Verbindungen typischerweise als Binder bezeichnet. In Analogie dazu werden sie auch hier als Binder bezeichnet, selbst wenn sie in nicht-polymerisierter Form funktional kein Bindemittel oder Binder, sondern dessen/deren Vorstufe und funktional eher das Dispersionsmedium sind.

Vorteilhaft ist eine beispielsweise in PEG-DA vorliegende Suspension keramischer Nanopartikel stabil, da PEG-DA unter Normalbedingungen (Normaldruck und Raumtemperatur) nicht verdunstet. Das wird durch den geringen Dampfdruck von PEG-DA bedingt. Im Gegensatz hierzu muss eine wässrige Suspension keramischer Partikel akribisch gegen Austrocknen geschützt werden.

Gemäß einer Ausführungsform ist der in der zweiten Flüssigkeit gelöste organische Vernetzer ausgewählt unter: Trimethylolpropane triacrylate, Trimethylolpropane ethoxylate triacrylate, Dipentaerythritol penta-/hexa-acrylate, Trimethylolpropane trimethacrylate, Pentaerythritol tetraacrylate, Di(trimethylolpropane) tetraacrylate. Geeignete photovernetzbare Substanzen (d.h. Binder und/oder Vernetzer) sind alle organischen Verbindungen, die mit mindestens einer terminalen Doppelbindung zur Polymerisation beitragen. PEG-DA (Polyethylenglycol-Diacrylat) hat bekanntermaßen zwei vernetzbare Gruppen und bildet bei Polymerisation somit Netzwerke, ist damit quasi Binder und Vernetzer zugleich. Vereinfachend werden PEG-DA und andere polymere Flüssigkeiten, beispielsweise auf Basis von PEG, hier als Binder bezeichnet. Damit werden in der vorliegenden Beschreibung und den Ansprüchen die Begriffe Vernetzer, Binder und Bindemittel als synonyme Begriffe verwendet.

Gemäß einer Ausführungsform ist der in der zweiten Flüssigkeit gelöste Mehr- bzw. Zwei-Photonenpolymerisationsinitiator ausgewählt unter: einem aromatischen Keton, Michlers Keton, einem Fluoren, einem E-Stilben, einem 2,5-Dibenzylidencyclo-alkanonbasierte Farbstoff, einem 2,5-Dibenzylidencyclopentatonen, Diphenyl(2,4,6-trimethylbenzoyl)phosphinoxid (TPO), 2-Benzyl-2-dimethylamino-1-(4-morpholinophenyl)-butanone-1 (Irgacure 369^{™}), 1-[4-(2-Hydroxyethoxy)-phenyl]-2-hydroxy-2-methyl-1-propane-1-one (Irgacure 2959^{™}), Irgacure OXE01, Bis(2,4,6-trimethylbenzoyl)-phenylphosphineoxide (Irgacure 819^{™}), Irgacure 127^{™}, Rose Bengal (4,5,6,7-tetrachloro-2',4',5',7'-tetraiodofluorescein), BA740 (Lehrstuhl für Organische Chemie II, Friedrich-Schiller-Universität Jena) und/oder Kombinationen daraus. Bevorzugt ist der Mehrphotonenpolymerisationsinitiator die Substanz BA 740, so wie beispielsweise in DE 10 2014 008 994 A1 beschrieben.

Gemäß einer Ausführungsform erfolgt das Einengen bei einer Temperatur im Bereich von Raumtemperatur (RT) bis maximal 50°C, bevorzugt bis maximal 30°C.

Vorteilhaft kann so die Verminderung des Ausgangsvolumens besonders schonend bewirkt werden, die Partikelkonzentration also ganz allmählich gesteigert werden und eine Spontan-Polymerisation und/oder Zersetzung des Monomer/Polymers erfolgreich verhindert werden.

Gemäß einer weiteren Ausführungsform enthält der Schlicker einen Dispergator, insbesondere einen nicht-ionischen Dispergator wie Triton X-100. Dispergatoren und ähnliche Verbindungen können bereits mit der wässrigen Suspension keramischer Nanopartikel in das oben beschriebene Ausgangsvolumen eingebracht werden.

Die vorstehend beschriebenen Ausführungsformen können beliebig miteinander kombiniert werden. Die Erfindung ist jedoch nicht auf die konkret beschriebenen Ausführungsformen beschränkt, sondern kann innerhalb des Schutzbereichs der unabhängigen Ansprüche in geeigneter Weise modifiziert und abgewandelt werden. Es liegt im Rahmen der Erfindung, einzelne Merkmale und Merkmalskombinationen einer Ausführungsform mit Merkmalen und Merkmalskombinationen einer anderen Ausführungsform geeignet zu kombinieren, um zu weiteren innerhalb des Schutzbereichs der unabhängigen Ansprüche liegenden erfindungsgemäßen Ausführungsformen zu gelangen.

Nachfolgend wird ein Ausführungsbeispiele anhand von Figuren näher erläutert. Dabei sind die Figuren nicht notwendigerweise maßstabsgerecht, der Schwerpunkt liegt vielmehr auf der Erläuterung des Grundprinzips der Erfindung.

### Kurze Beschreibung der Figuren

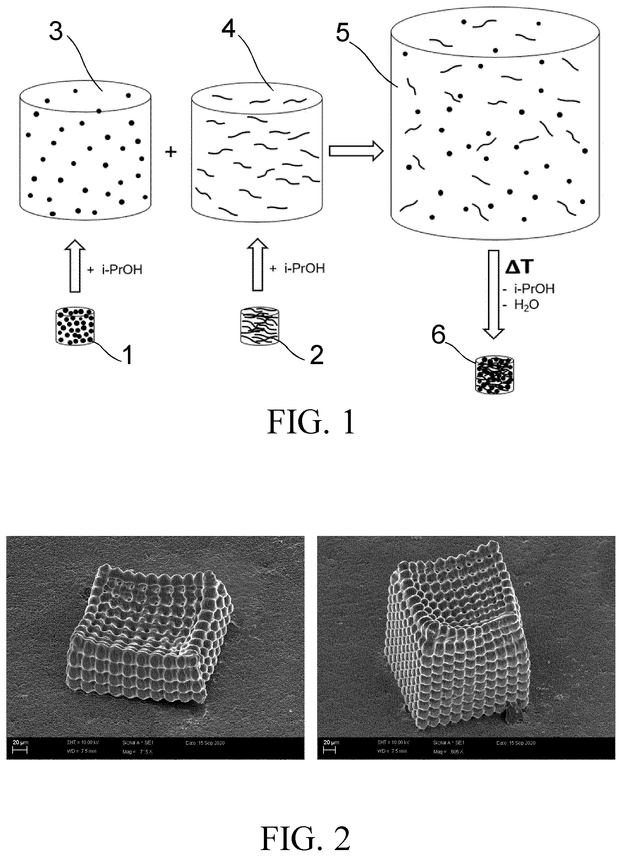

**Figur 1** zeigt schematische das hier vorgeschlagene Verfahren zum Erhalt eines stabilen photoaktivierbaren Schlickers umfassend keramische Nanopartikel.
**Figur 2** zeigt rasterelektronenmikroskopische Aufnahmen beispielhafter, mit laserinduzierter Zwei-Photonen-Polymerisation auf einem Aluminiumoxid-Substrat in verfahrensgemäß hergestelltem Schlicker additiv erzeugter dreidimensionaler Strukturen einer Größe von 100x100x40 µm (links) und 100x100x100 µm (rechts).

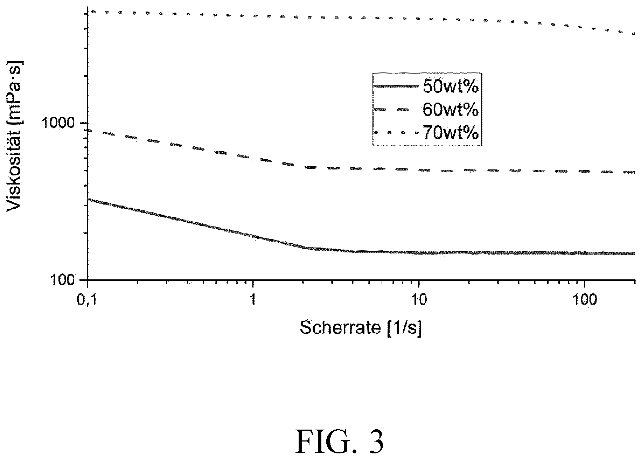

**Figur 3** zeigt Messkurven zur Viskosität beispielhaft erhaltener Schlicker mit unterschiedlicher Feststoffbeladung. Dabei handelt es sich um Zirkonoxid-Partikel in PEG-DA mit einem Molekulargewicht von Mₙ = 250 g/mol. Die Messung wurde mittels PP-25 Geometrie mit einem Spaltabstand von 0,5mm bei 20°C in einem Scherraten-Bereich von 0,1 bis 200 /s aufgenommen.

### Detaillierte Beschreibung

Im hier geschilderten Zusammenhang werden unter keramischen Nanopartikeln solche Partikel verstanden, deren hydrodynamischer intensitäts-gewichteter Durchmesser, bestimmbar mittels dynamischer Lichtstreuung (DLS), nicht mehr als 150 nm beträgt und die aus einem keramischen Material bestehen. Dabei ist das keramische Material ausgewählt unter: Aluminiumoxid (Al₂O₃), Siliziumdioxid (SiO₂), Natriumoxid (Na₂O), Calciumoxid (CaO), Phosphorpentoxid (P₂O₅), Bioglas, beta-Tricalciumphosphat (B-TCP), aluminiumoxidverstärkter Zirkonoxidkeramik (ATZ), Titannitrid (TiN), zirkonoxidverstärkter Aluminiumoxidkeramik (ZTA), Calciumcarbonat (CaCO₃), Lithium-Disilikat-Glaskeramik, AP40 Glas, Yttriumoxid Zirkonstabilisiertem Zirkonoxid (TZ-3YS-E), MGB (mesoporous bioactive glass), Ceriumoxid (CeO₂), Zinkoxid (ZnO), Zirkonoxid (ZrO₂), Hydroxylapatit (HA), Biphasischem Calciumphosphat (BCP), Blei-Zirkonat-Titanat (PZT) und Kombinationen daraus.

Zur Herstellung von nanoskaligem ZrO₂ nach bisher gebräuchlichen Standardverfahren wurde bisher Flammenpyrolyse und Fällung verwendet. Bei der Flammenpyrolyse von Zirkoniumsalzen (gemischt ggf. mit Yttriumsalzen) ist die Partikelgröße des dabei erhaltenen Materials zwar < 100 nm, jedoch breit verteilt. Das pyrolytisch erhaltene Material lässt sich sehr schlecht dispergieren, da sehr harte und fast nicht aufbrechbare Agglomerate entstehen. Mittels Fällung durch pH-Wert Änderung einer Zirkoniumsalzlösung (gemischt ggf. mit Yttriumsalzen) entsteht ein amorphes Präzipitat. Dieses muss getrocknet und kalziniert werden, bis ein isoliertes nanoskaliges Pulver entsteht. Auch das lässt sich sehr schlecht dispergieren, da sehr harte und fast nicht aufbrechbare Agglomerate durch die Feuerung, die zur Kristallisation notwendig ist, entstehen.

Im Rahmen der hier beschriebenen Arbeiten wurde deshalb zur Herstellung von sehr gut in Wasser und Lösemitteln dispergiertem dotiertem und undotiertem Zirkonoxid, hier als "nano-ZrO₂" bezeichnet, das nachfolgend beschriebene solvothermale Herstellungsverfahren eingesetzt: Ausgehend von einem Zirkoniumalkoholat (z.B. Zirconium(n)propylat, d.h. Zirconium(IV)-propoxid, Tetrapropylzirkonat), das in einem Alkohol (bevorzugt n-Propanol) vorliegt, wird eine Sol-Gel Synthese durchgeführt. Es kann auch in Kombination mit einem Yttriumsalz in Wasser zum Fällen des Zirkoniumalkoholats verwendet werden, wenn mit Yttrium dotiertes ZrO₂ erhalten werden soll. Das Zirkoniumalkoholat wird in einem Rührbehälter vorgelegt und mit einer Säure, bevorzugt mit Wasser verdünnte HNO₃, oder mit Wasser (und optional einem Yttriumsalz) unter starkem Rühren hydrolisiert. Das dabei entstehende Gemisch aus Wasser, n-Propanol und amorphem Zirkondioxid (ggf. mit Yttriumoxid) wird anschließend in einem Autoklaven unter Rühren autoklaviert (200-250°C, 20-40 bar, 1-3h) . Es entsteht nanoskaliges (ggf. dotiertes) ZrO₂ in einem Gemisch aus Wasser und Alkohol. Mittels einer Filterpresse wird das erhaltene Gemisch bis auf einen Anteil von zumindest 50 Masse-% ZrO₂ kompaktiert und liegt sodann als feuchter Filterkuchen vor. Dieser Filterkuchen wird mit einer Säure gesumpft (bevorzugt Essigsäure oder 3, 6, 9 - Trioxadecansäure), mit Wasser aufgeschlämmt und mit einer Keramik-verkleideten Rührwerkskugelmühle mit ZrO₂ Mahlperlen auf ein D90vol < 80 nm, bevorzugt < 50 nm besonders bevorzugt < 30 nm aufgemahlen. Dabei umfasst die Keramikauskleidung der Rührwerkskugelmühle bevorzugt Zirconiumoxid oder eine ähnliche Keramik. Es entsteht eine Suspension mit der Viskosität im Bereich von Wasser, die im sichtbaren Bereich und im NIR, also bei der typischerweise eingesetzten Wellenlänge des bei der additiven Fertigung genutzten Lasers nahezu transparent ist.

Die Primärpartikel des nano-ZrO₂ weisen einen Durchmesser < 10 nm auf, sind monoklin und/oder tetragonal und werden wie vorstehend beschrieben suspendiert in Wasser mit 45% Feststoff mit Hilfe eines Dispergators gewonnen. Die Form der Partikel ist rund bzw. nahezu rund, in dispergiertem Zustand sind die Partikel des nano-ZrO₂ zu 99% monodispers, und weisen in dispergiertem Zustand zu weniger als 1 % des Volumens der Dispersion eine Größe (mittels DLS bestimmten mittleren Durchmesser) von > 30 nm auf. Wenn eine Dotierung des nano-ZrO₂ gewünscht ist, so erfolgt diese bevorzugt mit Yttrium, im Bereich von 1 -10 Mol%, bevorzugt von 3-8 Mol%, weiter bevorzugt sind 3 Mol% und 8 Mol%. Alternativ können zur Dotierung beispielsweise auch Calcium- oder Magnesium-Salze eingesetzt werden. Bevorzugte molare Anteile der Dotierung liegen auch hier im Bereich von 2 Mol% - 8 Mol%, wobei hier die gleichen bevorzugten Bereiche molarer Anteile gelten. Bevorzugt dicht gesinterte Bauteile des in drei Modifikationen (monoklin, tetragonal und kubisch) auftretenden Zirkoniumoxid lassen sich ausschließlich in kubischer und/oder tetragonaler Kristallmodifikation fertigen: Da durch einen Volumensprung beim Überschreiten einer bestimmten Temperatur eine Rissbildung und damit ungünstigenfalls einhergehende Zerstörung der Keramik auftritt, können dem ZrO₂ Stabilisatoren in Form von Dotierungen zugesetzt werden. Vorteilhaft stabilisieren Magnesiumoxid (MgO), Calciumoxid (CaO) oder Yttriumoxid (Y₂O₃) die bevorzugte Kristallmodifikation des Zirkoniumoxid.

Für die Verwendung von nano-ZrO₂ in der additiven Fertigung von filigranen Keramikbauteilen ist es vorteilhaft, die wie oben beschrieben erhaltene wässrige Suspension in ein Lösemittel z.B. einen Alkohol oder einen Ester umzuarbeiten, in dem zusätzliche Bestandteile (z.B. Photoinitiator und Bindemittel) löslich sind. Bevorzugte Lösemittel sind beispielsweise: Ethanol, n-Propanol, iso-Propanol sowie Methoxypropanol. Dabei wird wie folgt vorgegangen: Zunächst erfolgt ein Abziehen des Wassers durch Abdampfen bzw. Gefriertrocknen bis auf eine Restfeuchte <5%, danach ein Aufschlämmen des getrockneten nano-ZrO₂ in dem gewünschten Lösemittel. Mittels Ultraschall und/oder unter Verwendung eines Attritors und/oder einer Rührwerkskugelmühle kann eine zusätzliche Nachdispergierung vorgenommen werden. Die in einem Lösemittel analog zu Wasser erzielte Partikelgröße des nano-ZrO₂ ist, angegeben als D90vol, in Dispersion < 80 nm, bevorzugt < 50 nm, besonders bevorzugt < 30 nm - gemessen mittels DLS (dynamischer Lichtstreuung) oder PCS (Photonenkorrelationsspektroskopie bzw. Laserbeugung). Hierbei ist unter einem D90vol - Wert derjenige Partikeldurchmesser von 90% des kumulativen Volumens zu verstehen. Mithin gibt der D90vol - Wert die volumetrische Menge des Partikeldurchmessers bei 90 % kumulativer Größe an, d.h. 90 Volumenprozent der Partikel sind kleiner als dieser Durchmesser.

Alternativ kann die Umarbeitung des nano-ZrO₂ in ein Lösemittel bzw. Dispersionsmedium mit höherem Siedepunkt als Wasser erfolgen. Hierzu wird dieses der bisher wässrigen Suspension zugesetzt. Danach wird das Wassers abdestilliert, das dispergierte Material verbleibt im neuen hochsiedenden Dispersionsmedium unter Beibehaltung der ursprünglichen Partikelgrößenverteilung, d.h. ohne die Bildung unerwünschter Agglomerate. Mit anderen Worten ausgedrückt, liegt das nano-ZrO₂ als kolloidale Flüssigkeit vor, in der dann weitere, für den 2PP-Prozess erforderliche Komponenten gelöst werden.

Bevorzugt weisen die eingesetzten keramischen Nanopartikel einen hydrodynamischen intensitäts-gewichteten Durchmesser im Bereich von 5-150 nm auf. Weiter bevorzugt sind Durchmesser von 10-100 nm, besonders bevorzugt von 20-80 nm. Dispersionen von keramischen Partikeln dieser Größenbereiche weisen eine optische Transparenz bei bevorzugt eingesetzten Lasern bzw. von diesen emittierten Wellenlängen im NIR-Bereich von 750 nm bis 1050 nm, weiter bevorzugt 750 nm - 850 nm auf und können somit in Zwei-Photonenpolymerisationsbasierten Herstellungsverfahren (2PP) zu Grünkörpern verfestigt werden, deren filigrane Strukturen sich bis in den unteren µm-Bereich von weniger als 10 µm, bevorzugt 0,1 - 5 µm, weiter bevorzugt von 0,1-1 µm erstrecken.

Vorteilhaft kann die Kombination der beschriebenen Herstellung des organischen Schlickers unter Nutzung einer geeigneten Quelle für nano-suspendierte keramische Partikel, beispielsweise für die keramische Stereolithographie, aber auch für die additive Fertigung mittels laserinduzierter Zwei-Photonenpolymerisation (oder Mehr-Photonen-Polymerisation) unter Verwendung eines entsprechenden Zwei- oder Mehr-Photonen-Polymerisationsinitiators genutzt werden. Durch die beschriebene Darstellung eines im Wellenlängenbereich des zur 2PP genutzten Lasers transparenten keramischen Schlickers wird ein großes Feld des laserinduzierten Drucks (der additiven Erzeugung) von Grünkörpern einer Vielzahl von Keramiken in hoher Auflösung und Reproduzierbarkeit eröffnet. Durch die im erfindungsgemäßen Schlicker erreichbare hohe Partikelfracht von bis zu 80 Gewichts-% ermöglicht den dreidimensionalen Druck gesinterter keramischer Bauteile mit geringerer Verzerrung und Schrumpf und dadurch mit höherer Formtreue, im Verhältnis zu Bauteilen aus dem wasserhaltigen Schlicker. Damit ergibt sich ein neues Anwendungsgebiet für Keramiken in mikro- bis nano-strukturierten Anwendungen, wie Mikromechaniken in der Mikrofluidik, Mikro- und Nanofilter, medizinische Kleinst-Implantate oder piezokeramische Mikro-Aktuatoren.

Vorteilhaft gestattet das vorgeschlagene Verfahren die Formulierung eines optisch strukturierbaren Schlickers, der keramische Nanopartikel und photoaktive Komponenten umfasst. Dabei wird verfahrensgemäß von einer wässrigen Suspension der keramischen Nanopartikel ausgegangen, deren Partikelfracht weit außerhalb des für einen Keramikschlicker erstrebenswerten Partikelfracht von 50-85 Gewichts-% liegt. Durch den Zusatz geeigneter photoaktiver Substanzen, photovernetzbare Monomere/Polymere wie Polyethylenglycol-Diacrylat, Vernetzer und Initiatoren wie BA 740, kann der Schlicker für die Strukturierung mit unterschiedlichen optischen Strukturierungstechniken angepasst werden. Der verfahrensgemäß erhaltene Schlicker ist bevorzugt für die Mehr-Photonen-Polymerisation, insbesondere für die Zwei-Photonen-Polymerisation (2PP) geeignet, kann aber auch mittels additiver stereolithografischer Techniken strukturiert werden. Die kleinste räumliche Ausdehnung von Strukturelementen der mit dem Schlicker optisch erzeugbaren keramischen Grünkörper liegt in einem Bereich von 0,1 µm bis 10 µm, typischerweise zwischen 0,1 und 5 µm.

Insbesondere zeigt **Figur 1** die einzelnen Schritte des vorgeschlagenen Schlickerherstellungsverfahrens. Eine in Wasser vorliegende Suspension keramischer Nanopartikel 1 wird durch Zusatz eines Überschusses von Isopropanol (i-PrOH) verdünnt.

Durch die Verdünnung der wässrigen Suspension keramischer Nanopartikel 1 mit einem Überschuss iso-Propanol wird die als erste Flüssigkeit 3 bezeichnete Suspension der Nanopartikel 1 erhalten, in der die Nanopartikel 1 nach wie vor dispergiert vorliegen. Das zur Polymerisation mittels Zwei-Photonen-Absorption vorgesehene Polymer 2 wird ebenso in iso-Propanol gelöst bzw. verdünnt, wodurch die als zweite Flüssigkeit 4 bezeichnete Flüssigkeit, umfassend einen Überschuss an i-PrOH erhalten wird.

Typischerweise wird die wässrige Suspension keramischer Nanopartikel mit dem ca. 10-fachen Volumen an i-PrOH verdünnt (gestreckt). Da i-PrOH und Wasser zu vollständig miteinander mischbar sind entsteht eine i-PrOH-Suspension mit ca. 10 vol% Wasser. Auch das photoaktive organische Medium wird mit i-PrOH auf ein Vielfaches seines Volumens gestreckt. Wird beides miteinander gemischt, so ist nur noch ein kleiner Anteil von etwa 5 vol.-% Wasser vorhanden. Beim Verdunsten zieht das i-PrOH diesen kleinen Wasseranteil mit, sodass letztlich die keramischen Nanopartikel vollständig dispergiert in einem photovernetzbaren organischen Medium mit geringem Dampfdruck vorliegen.

Dazu werden verfahrensgemäß die erste Flüssigkeit 3 und die zweite Flüssigkeit 4 zu einer als Ausgangsvolumen bezeichneten Mischung 5 vereint. In der flüssigen Phase des Ausgangsvolumens 5 liegen sowohl das organische Bindemittel als auch die keramischen Nanopartikel frei von Agglomeraten dispergiert vor. Die dominierende flüssige Phase des Ausgangsvolumens 5 ist iso-Propanol. In einem abschließenden Verfahrensschritt wird mit Hilfe einer Steigerung Δ der Temperatur T, optional unter gleichzeitiger Verminderung des Drucks gegenüber dem Umgebungsdruck, ein Lösungsmittelgemisch, umfassend iso-Propanol und Wasser langsam und schonend aus dem Ausgangsvolumen 5 entfernt. Dadurch werden die Nanopartikel 1 im homogenen Gemisch 5 mit dem organischen Bindemittel 2 bis zur gewünschten Zielkonzentration im angestrebten Schlicker 6 aufkonzentriert. Das Volumen des Schlickers 6 entspricht hierbei im Wesentlichen dem Volumen der ursprünglich eingesetzten wässrigen Suspension der keramischen Nanopartikel 1 oder ist geringer oder größer als dieses. Nach Abschluss des Einengens ist sowohl Wasser als auch iso-Propanol vollständig abgedampft, lediglich die organischen miteinander vernetzbaren Monomere/Polymere, Bindemittel, Linker - wie auch immer bezeichnet - und der gleichmäßig verteilte Mehrphotonenpolymerisationsinitiator liegen als organisches photovernetzbares Dispersionsmedium der keramischen Nanopartikel vor. Bevorzugt werden als organische Bindemittel PEG-DA mit einem Molekulargewicht Mₙ= 250 g/mol, PEG-DA mit einem Molekulargewicht Mₙ = 575 g/mol, oder HDDA mit einem Molekulargewicht Mₙ = 226.27 g/mol verwendet. Über den angegebenen Werten sollte das Molekulargewicht nicht liegen, da dann die Viskosität nach Partikelbeladung wieder zu hoch wird. Unter diesen Werten liegende Molekulargewichte des Bindemittels sind hingegen besser geeignet.

In dem erfindungsgemäß hergestellten Schlicker, der eine agglomeratfreie kolloidale Dispersion keramischer Nanopartikel umfasst, können lasergestützt mittels Zwei-Photonen-Absorption dreidimensional räumlich aufgelöst fotochemische Prozesse initiiert werden, die zur Ausbildung eines Grünkörpers im erfindungsgemäß hergestellten Schlicker führen. Der erzeugte Grünkörper umfasst polymerfixierte keramische Nanopartikel. Mittels anschließenden Wasch-, Trocken-, Entbinderungs- und Sinterschritten ist schließlich ein keramisches Bauteil erhältlich, das sich durch eine Dimension von oberflächlichen oder im inneren Volumen des Bauteils erstreckende Strukturen im Mikrometermaßstab auszeichnet. Typische minimale Strukturgrößen liegen im Bereich von 0,1 bis 10 µm, bevorzugt im Bereich von 0,1 bis 5 µm, weiter bevorzugt im Bereich von 0,1 bis 1 µm.

Insbesondere zeigt **Figur 2** rasterelektronenmikroskopische Aufnahmen zweier beispielhafter Modellstrukturen, die mit laserinduzierter Zwei-Photonen-Polymerisation auf einem Aluminiumoxid-Substrat in verfahrensgemäß hergestelltem Schlicker mit 70 Gewichts-% Keramik additiv erzeugt wurden. Die dreidimensionalen ungesinterten Strukturen haben einer Größe von 100x100x40 µm (links) und 100x100x100 µm (rechts), wobei die rechte Struktur mit einer Höhe von 100 µm die Höhenbeschränkung ausreizt, die durch den geringen Arbeitsabstand von ca. 200 µm des vorliegend verwendeten Objektivs verursacht ist. Die Verzerrung der Strukturen ist durch eine nicht sachgemäße Trocknung ohne Kritisch-Punkt-Trocknung zu erklären.

**Figur 3** zeigt Messkurven zur Viskosität beispielhaft erhaltener Schlicker mit unterschiedlicher Feststoffbeladung. Dabei handelt es sich um Zirkonoxid-Partikel in PEG-DA eines Molekulargewichts von Mₙ = 250 g/mol. Die Messung wurde mittels PP-25 Geometrie mit einem Spaltabstand von 0,5mm bei 20°C in einem Scherraten-Bereich von 0,1 bis 200 /s aufgenommen. Alle Schlicker zeigen ein Polymer- und Komposit-typisches scherentzähendes Verhalten, wo mit steigender Scherrate die Viskosität sinkt. Der Verlauf liegt bei höheren Werten direkt proportional zur steigenden Partikelfracht, wobei bei einer Scherrate von 100/s die Viskosität des Schlickers mit 50 Gewichts.-% bei 150 mPa·s; die Viskosität des 60 Gewichts-%-igen Schlickers bei 495 mPa·s und die Viskosität des 70 Gewichts-%-igen Schlickers bei 4080 mPa·s abzulesen ist. Der Schlicker aus diesem Sortiment mit 70 Gewichts.-% erwies sich aufgrund seiner hohen Partikelfracht und geeigneten Viskosität am geeignetsten für die Zwei-Photonen-Polymerisation.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: wässrige Suspension keramischer (oder metallischer) Nanopartikel
- 2: organisches Bindemittel
- 3: erste Lösung
- 4: zweite Lösung
- 5: Mischung, Ausgangsvolumen
- 6: Schlicker umfassend suspendierte (keramische oder metallische) Nanopartikel
- i-PrOH: iso-Propanol
- ΔT: Erwärmung von Raumtemperatur auf 30-50°C

## Patentansprüche

1. Schlickerherstellungsverfahren für die optisch induzierte Ausbildung eines keramischen Grünkörpers umfassend:
- Verdünnen einer wässrigen Suspension keramischer Nanopartikel mit iso-Propanol und Erhalt einer ersten Flüssigkeit, umfassend dispergierte keramische Nanopartikel;
- Erhalten eines Ausgangsvolumens durch Mischen der ersten Flüssigkeit, umfassend dispergierte keramische Nanopartikel mit einer zweiten Flüssigkeit, wobei die zweite Flüssigkeit überwiegend in ein in iso-Propanol gelöste organisches Bindemittel, einen Mehrphotonenpolymerisationsinitiator und einen organischen Vernetzer umfasst;
- Einengen des Ausgangsvolumens der Mischung der ersten und der zweiten Flüssigkeiten durch Erwärmen, Rühren und unter optionaler Beaufschlagung der erwärmten und gerührten Mischung mit einem Unterdruck gegenüber einem Umgebungsdruck und/oder einer Temperatursteigerung gegenüber einer Ausgangstemperatur der Mischung,
wobei das Einengen des Ausgangsvolumens bis auf ein Endvolumen erfolgt und das Endvolumen den hergestellten Schlicker umfassend keramische Nanopartikel kennzeichnet,
wobei ein Feststoffanteil der keramischen Nanopartikel im Endvolumen des Schlickers von 50 bis 95 Gewichts-%, bevorzugt von 60 bis 90 Gewichts-%, weiter bevorzugt von 65 bis 80 Gewichts-% beträgt.

2. Schlickerherstellungsverfahren nach Anspruch 1, wobei das Verdünnen der wässrigen Suspension keramischer Nanopartikel mit einem 5 bis 10-fachen Volumenüberschuss von iso-Propanol erfolgt.

3. Schlickerherstellungsverfahren nach Anspruch 1 oder 2, wobei das Erwärmen beim Einengen bis auf eine Temperatur von 50 °C, bevorzugt bis auf eine Temperatur von 30°C erfolgt.

4. Schlickerherstellungsverfahren nach einem der vorstehenden Ansprüche, wobei das Einengen unter Verwendung von einem Magnetrührer mit Heizplatte oder mit einem Vakuum-Rotationsverdampfer erfolgt.

5. Schlickerherstellungsverfahren nach einem der vorstehenden Ansprüche, wobei das in der zweiten Flüssigkeit gelöste organische Bindemittel ausgewählt ist unter: Polymethylmethacrylat (PMMA), 1,6-Hexandioldiacrylat (HDDA, 1,6-Hexandioldimethacrylat (HDDMA), acryliertem Polyethylenglykol (PEG-DA = Polyethylenglykoldiacrylat), Polypropylenglykol dimethacrylat (PPG-DMA), acryliertem Polypropylenglycol (PPG-DA), Dipentaerythritol pentaacrylat, Trimethylolpropane triacrylat, ethoxyliertem Pentaerythritoltetraacrylat (EPTA) und 2-Hydroxyethylacrylat.

6. Schlickerherstellungsverfahren nach einem der vorstehenden Ansprüche, wobei der in der zweiten Flüssigkeit gelöste organische Vernetzer ausgewählt ist unter: Trimethylolpropane triacrylate, Trimethylolpropane ethoxylate triacrylate, Dipentaerythritol penta-/hexa-acrylate, Trimethylolpropane trimethacrylate, Pentaerythritol tetraacrylate, und Di(trimethylolpropane) tetraacrylate.

7. Schlickerherstellungsverfahren nach einem der vorstehenden Ansprüche, wobei der in der zweiten Flüssigkeit gelöste Mehr-Photonenpolymerisationsinitiator ausgewählt ist unter: einem aromatischen Keton, Michlers Keton, einem Fluoren, E-Stilben, 2,5-Dibenzylidencyclo-alkanon-basierten Farbstoffen, 2,5-Dibenzylidencyclopentatonen, Diphenyl(2,4,6-trimethylbenzoyl)phosphinoxid (TPO), 2-Benzyl-2-dimethylamino-1-(4-morpholinophenyl)-butanone-1, 1-[4-(2-Hydroxyethoxy)-phenyl]-2-hydroxy-2-methyl-1-propane-1-one, Bis(2,4,6-trimethylbenzoyl)-phenylphosphineoxide, Rose Bengal (4,5,6,7-tetrachloro-2',4',5',7'-tetraiodofluorescein).

8. Schlickerherstellungsverfahren nach einem der vorstehenden Ansprüche, wobei der Schlicker einen Dispergator umfasst, welcher der zweiten Flüssigkeit zugesetzt wird.

9. Schlickerherstellungsverfahren nach einem der vorstehenden Ansprüche, wobei die Nanopartikel der wässrigen Suspension keramischer Nanopartikel Zirkonoxid oder ein mit Yttrium und/oder Calcium und/oder Magnesium dotiertes Zirkonoxid umfassen.

10. Schlickerherstellungsverfahren nach Anspruch 9, wobei die wässrige Suspension keramischer Nanopartikel umfassend Zirkonoxid durch eine solvothermale Synthese gewonnen wird.

11. Schlickerherstellungsverfahren nach Anspruch 10, wobei die solvothermale Synthese eine Hydrolyse eines Zirkoniumalkoholats, bevorzugt die Hydrolyse von Zirconium(IV)-propoxid umfasst, deren Reaktionsprodukte einer Autoklavierung unterzogen und anschließend einer Säurebehandlung, beispielsweise mit Essigsäure oder mit 3,6,9-Trioxadekansäure, unterzogen werden.

12. Schlickerherstellungsverfahren nach Anspruch 11, wobei ein Produkt der Säurebehandlung abschließend einer mechanischen Zerkleinerung, bevorzugt mit einer Kugelmühle, unterzogen wird.

## Claims

1. Slurry production process for the optically induced formation of a ceramic green body comprising:
- Diluting an aqueous suspension of ceramic nanoparticles with iso-propanol and obtaining a first liquid comprising dispersed ceramic nanoparticles;
- Obtaining an initial volume by mixing the first liquid comprising dispersed ceramic nanoparticles with a second liquid, wherein the second liquid comprises predominantly an organic binder dissolved in organic binder dissolved in iso-propanol, a multiphoton polymerization initiator and an organic crosslinker;
- Reducing the initial volume of the mixture of the first and second liquids by heating, stirring and optionally subjecting the heated and stirred mixture to a negative pressure relative to an ambient pressure and/or a temperature increase relative to an initial temperature of the mixture,
wherein the initial volume is reduced down to a final volume and the final volume characterizes the produced slurry comprising ceramic nanoparticles,
wherein a solids content of the ceramic nanoparticles in the final volume of the slurry is from 50 to 95% by weight, preferably from 60 to 90% by weight, more preferably from 65 to 80% by weight.

2. The slurry production process according to claim 1, wherein the aqueous suspension of ceramic nanoparticles is diluted with a 5 to 10-fold excess volume of iso-propanol.

3. The slurry production process according to claim 1 or 2, wherein the heating during concentration is carried out to a temperature of 50°C, preferably to a temperature of 30°C.

4. The slurry production method according to any one of the preceding claims, wherein the concentration is carried out using a magnetic stirrer with a hot plate or a vacuum rotary evaporator.

5. The slurry production process according to any one of the preceding claims, wherein the organic binder dissolved in the second liquid is selected from: polymethyl methacrylate (PMMA), 1,6-hexanediol diacrylate (HDDA, 1,6-hexanediol dimethacrylate (HDDMA), acrylated polyethylene glycol (PEG-DA = polyethylene glycol diacrylate), polypropylene glycol dimethacrylate (PPG-DMA), acrylated polypropylene glycol (PPG-DA), dipentaerythritol pentaacrylate, trimethylolpropane triacrylate, ethoxylated pentaerythritol tetraacrylate (EPTA) and 2-hydroxyethyl acrylate.

6. The slurry production process according to any one of the preceding claims, wherein the organic crosslinker dissolved in the second liquid is selected from: Trimethylolpropane triacrylate, Trimethylolpropane ethoxylate triacrylate, Dipentaerythritol penta-/hexa-acrylate, Trimethylolpropane trimethacrylate, Pentaerythritol tetraacrylate, and Di(trimethylolpropane) tetraacrylate.

7. The slurry production process according to any one of the preceding claims, wherein the multi-photon polymerization initiator dissolved in the second liquid is selected from: an aromatic ketone, Michler's ketone, a fluorene, E-stilbene, 2,5-dibenzylidenecycloalkanone-based dyes, 2,5-dibenzylidenecyclopentatones, diphenyl(2,4,6-trimethylbenzoyl)phosphine oxide (TPO), 2-benzyl-2-dimethylamino-1-(4-morpholinophenyl)-butanone-1, 1-[4-(2-hydroxyethoxy)-phenyl]-2-hydroxy-2-methyl-1-propane-1-one, bis(2,4,6-trimethylbenzoyl)-phenylphosphine oxides, Rose Bengal (4,5,6,7-tetrachloro-2',4',5',7'-tetraiodofluorescein),.

8. A slurry manufacturing method according to any one of the preceding claims, wherein the slurry comprises a dispersant which is added to the second liquid.

9. The slurry production process according to any one of the preceding claims, wherein the nanoparticles of the aqueous suspension of ceramic nanoparticles comprise zirconium oxide or a zirconium oxide doped with yttrium and/or calcium and/or magnesium.

10. The slurry production process according to claim 9, wherein the aqueous suspension of ceramic nanoparticles comprising zirconium oxide is obtained by solvothermal synthesis.

11. The slurry production process according to claim 10, wherein the solvothermal synthesis comprises hydrolysis of a zirconium alcoholate, preferably hydrolysis of zirconium(IV)propoxide, the reaction products of which are subjected to autoclaving and then to an acid treatment, for example with acetic acid or with 3,6,9-trioxadecanoic acid.

12. The slurry production process according to claim 11, wherein a product of the acid treatment is finally subjected to mechanical comminution, preferably with a ball mill.

## Revendications

1. Procédé de fabrication de barbotine pour la formation optiquement induite d'un corps vert céramique, comprenant :
- la dilution d'une suspension aqueuse de nanoparticules céramiques avec de l'isopropanol et l'obtention d'un premier liquide, comprenant des nanoparticules céramiques dispersées ;
- l'obtention d'un volume de départ par mélange du premier liquide, comprenant des nanoparticules céramiques dispersées, avec un second liquide, le second liquide comprenant principalement un liant organique dissous dans de l'isopropanol, un initiateur de polymérisation multi-photonique et un agent de réticulation organique ;
- la concentration du volume de départ du mélange du premier et du second liquides par chauffage, agitation et, en option, application d'une pression réduite par rapport à une pression ambiante et/ou d'une augmentation de température par rapport à une température initiale du mélange chauffé et agité,
dans lequel la concentration du volume de départ est effectuée jusqu'à un volume final, et le volume final caractérise la barbotine fabriquée comprenant des nanoparticules céramiques,
dans lequel la teneur en solides des nanoparticules céramiques dans le volume final de la barbotine est de 50 à 95 % en poids, de préférence de 60 à 90 % en poids, plus préférablement de 65 à 80 % en poids.

2. Procédé de fabrication de barbotine selon la revendication 1, dans lequel la dilution de la suspension aqueuse de nanoparticules céramiques est effectuée avec un excès de volume de 5 à 10 fois d'isopropanol.

3. Procédé de fabrication de barbotine selon la revendication 1 ou 2, dans lequel le chauffage lors de la concentration est effectué jusqu'à une température de 50 °C, de préférence jusqu'à une température de 30 °C.

4. Procédé de fabrication de barbotine selon l'une des revendications précédentes, dans lequel la concentration est effectuée en utilisant un agitateur magnétique avec plaque chauffante ou un évaporateur rotatif sous vide.

5. Procédé de fabrication de barbotine selon l'une des revendications précédentes, dans lequel le liant organique dissous dans le second liquide est choisi parmi :
polyméthacrylate de méthyle (PMMA), 1,6-Hexanedioldiacrylate (HDDA), 1,6-Hexanedioldiméthacrylate (HDDMA), polyéthylèneglycol acrylé (PEG-DA = polyéthylèneglycoldiacrylate), polypropylèneglycol diméthacrylate (PPG-DMA), polypropylèneglycol acrylé (PPG-DA), pentaacrylate de dipentaérythritol, triacrylate de triméthylolpropane, tétraacrylate de pentaérythritol éthoxylé (EPTA) et 2-hydroxyéthylacrylate.

6. Procédé de fabrication de barbotine selon l'une des revendications précédentes, dans lequel l'agent de réticulation organique dissous dans le second liquide est choisi parmi :
triacrylate de triméthylolpropane, triacrylate de triméthylolpropane éthoxylé, penta-/hexa-acrylate de dipentaérythritol, triméthacrylate de triméthylolpropane, tétraacrylate de pentaérythritol et tétraacrylate de di(triméthylolpropane).

7. Procédé de fabrication de barbotine selon l'une des revendications précédentes, dans lequel l'initiateur de polymérisation multiphotonique dissous dans le second liquide est choisi parmi :
une cétone aromatique, la cétone de Michler, un fluorène, l'E-stilbène, des colorants à base de 2,5-dibenzylidène-cyclo-alcanone, des 2,5-dibenzylidènecyclopentanones, l'oxyde de diphényl(2,4,6-triméthylbenzoyl)phosphine (TPO), la 2-benzyl-2-diméthylamino-1-(4-morpholinophényl)-butan-1-one, la 1-[4-(2-hydroxyéthoxy)-phényl]-2-hydroxy-2-méthyl-1-propan-1-one, le bis(2,4,6-triméthylbenzoyl)-phénylphosphineoxyde, le Rose Bengale (4,5,6,7-tétrachloro-2',4',5',7'-tétraiodofluorescéine).

8. Procédé de fabrication de barbotine selon l'une des revendications précédentes, dans lequel la barbotine comprend un disperseur, qui est ajouté au second liquide.

9. Procédé de fabrication de barbotine selon l'une des revendications précédentes, dans lequel les nanoparticules de la suspension aqueuse de nanoparticules céramiques comprennent de l'oxyde de zirconium ou un oxyde de zirconium dopé avec de l'yttrium et/ou du calcium et/ou du magnésium.

10. Procédé de fabrication de barbotine selon la revendication 9, dans lequel la suspension aqueuse de nanoparticules céramiques comprenant de l'oxyde de zirconium est obtenue par une synthèse solvothermale.

11. Procédé de fabrication de barbotine selon la revendication 10, dans lequel la synthèse solvothermale comprend une hydrolyse d'un alcoolate de zirconium, de préférence l'hydrolyse du zirconium(IV)-propoxyde, dont les produits de réaction sont soumis à un traitement en autoclave puis à un traitement acide, par exemple avec de l'acide acétique ou de l'acide 3,6,9-trioxadécanoïque.

12. Procédé de fabrication de barbotine selon la revendication 11, dans lequel un produit du traitement acide est finalement soumis à un broyage mécanique, de préférence avec un broyeur à billes.
